Europäisches Patentamt

European Patent Office

Office européen des brevets

(11) Veröffentlichungsnummer : **0 202 462**
**B1**

(12) # EUROPÄISCHE PATENTSCHRIFT

(45) Veröffentlichungstag der Patentschrift :
28.06.89

(51) Int. Cl.⁴ : **A 01 C 15/04**

(21) Anmeldenummer : 86105048.2

(22) Anmeldetag : 12.04.86

(54) Vorrichtung zum Streuen von Dünger oder dergleichen.

(30) Priorität : 27.04.85 DE 3515362
09.11.85 DE 3539754
09.11.85 DE 3539753

(43) Veröffentlichungstag der Anmeldung :
26.11.86 Patentblatt 86/48

(45) Bekanntmachung des Hinweises auf die Patenterteilung : 28.06.89 Patentblatt 89/26

(84) Benannte Vertragsstaaten :
AT BE DE FR GB NL SE

(56) Entgegenhaltungen :
CH—A— 445 177
DE—A— 1 940 922
DE—A— 2 238 626
DE—C— 3 429 042
FR—A— 2 017 742
GB—A— 871 261

(73) Patentinhaber : **Rauch Landmaschinenfabrik GmbH**
**Postfach 1107 Landstrasse 14**
**D-7573 Sinzheim (DE)**

(72) Erfinder : **Schickinger, Harald**
**Kunzenäckerle 12**
**D-7573 Sinzheim-Winden (DE)**
Erfinder : **Rauch, Norbert, Dipl. Ing.**
**Bergseestrasse 49**
**D-7573 Sinzheim (DE)**

(74) Vertreter : **Dr.-Ing. Hans Lichti Dipl.-Ing. Heiner Lichti**
**Dipl.-Phys. Dr. Jost Lempert**
**Postfach 41 07 60 Durlacher Strasse 31**
**D-7500 Karlsruhe 41 (DE)**

EP 0 202 462 B1

## Beschreibung

Die Erfindung betrifft eine Vorrichtung zum Streuen von Dünger oder dgl. mit einem von der Pritsche eines Fahrzeugs, z. B. eines Systemschleppers, Selbstfahrers oder Anhängers, aufgenommenen Vorratsbehälter mit Auslauföffnungen und darunter angeordneten Dosierorganen, die den Dünger an darunter befindliche, einerseits über einen Luftverteiler an ein Gebläse angeschlossene, andererseits den Einlauf je einer Transportleitung bildende Injektoren abgeben, und mit einem am Fahrzeugheck heb- und senkbaren pneumatischen Streuaggregat, das mehrere sich beiderseits der Fahrzeuglängsachse und quer zu dieser erstreckende, außen mit unterschiedlichem Abstand von dieser an Verteilerorganen ausmündende und in eine Fahrstellung anklappbare Streuleitungen aufweist, die innen über je einen Injektor und einen Luftverteiler an wenigstens ein weiteres Gebläse angeschlossen sind, wobei je eine Transportleitung an dem Injektor einer Streuleitung ausmündet.

Vorrichtungen der vorgenannten Art sind bekannt (DE-C-34 29 042). Sie zeichnen sich im Grundaufbau dadurch aus, daß Vorratsbehälter und Streuaggregat nicht - wie sonst üblich - zusammen vom Dreipunktgestänge eines Schleppers oder dergleichen aufgenommen werden, sondern als getrennte Baueinheiten ausgebildet sind, wobei der Vorratsbehälter auf die Pritsche des Fahrzeugs aufgesetzt, das Streuaggregat hingegen vom Dreipunktgestänge aufgenommen ist. Der Dünger wird unmittelbar am Auslauf des Vorratsbehälters auf dem Fahrzeug mittels der Dosierorgane dosiert und gelangt pneumatisch über Transportleitungen in die Injektoren an den Streuleitungen des Streuaggregates. Von dort wird der Dünger wiederum pneumatisch durch wenigstens ein weiteres Fördergebläse durch die Streuleitungen zu den Verteilerorganen gefördert und dort ausgetragen. Der Vorteil dieses Aufbaus liegt darin, daß aufgrund der günstigen Massenverteilung einerseits großvolumige Vorratsbehälter mit einem entsprechenden Fassungsvermögen eingesetzt werden können, andererseits große Streubreiten möglich sind, da das Dreipunktgestänge nur noch das Gewicht des Streuaggregates zu übernehmen hat, dessen Streuleitungen dadurch entsprechend länger ausgebildet werden können. Durch das gesonderte Gebläse am Streuaggregat läßt sich der Dünger auch ohne weiteres bis durch lange Streuleitungen transportieren. Trotz der größeren Streubreite von weit über 18 m kann das Fassungsvermögen des Vorratsbehälters groß genug ausgelegt werden, um große Flächen mit einer Behälterfüllung bestreuen zu können. Im übrigen ist es ohne weiteres möglich, den Vorratsbehälter auf dem Feld aus einem Hochkipper oder mittels Überladeschnecke nachzufüllen. Weiterhin ergibt sich durch diese Bauart eine sehr günstige Verteilung der konstruktiven Massen und der Zuladung, so daß die Lasten auf die Fahrzeugachsen gut verteilt werden und die Geländegängigkeit und Lenkfähigkeit des Fahrzeugs in keiner Weise beeinträchtigt wird.

Es ist zwar bei einem Kombinations-Anbaugerät zum Düngen und Säen bekannt, den Behälter für Dünger und Saatgut seitlich auf einem normalen Schlepper anzuordnen und den Dünger bzw. das Saatgut pneumatisch zu dem Streuaggregat am hinteren Ende des Schleppers zu transportieren, doch lassen sich damit weder große Mengen im Behälter aufnehmen, noch große Streubreiten erreichen.

Aufgrund der großen Streubreite sind zur Erzielung einer gleichmäßigen Düngerverteilung eine entsprechend große Anzahl von Streuleitungen notwendig, um einen minimal notwendigen Abstand der Verteilerorgane zu erreichen. Da diese Streuleitungen alle horizontal nebeneinander liegen, ergibt sich auch in Richtung der Fahrzeuglängsachse eine entsprechende Baulänge. Ferner müssen die Streuleitungen durch einen sie übergreifenden Träger gehalten werden, der zur Vermeidung von Biegeschwingungen als vielgliedriger Fachwerkträger ausgebildet sein muß. Gleichwohl leidet naturgemäß die Biege- und Schwingungssteifigkeit mit zunehmender Streubreite. Diese relativ große Schwingungsempfindlichkeit während des dynamischen Fahrbetriebs wird noch dadurch erhöht, daß die Streuleitungen über ihre Länge in Abschnitte unterteilt werden müssen, in sich also kein selbsttragendes Bauteil darstellen und zudem diese Abschnitte über horizontale, zur Fahrzeuglängsachse parallele Gelenke miteinander verbunden sind, um die einzelnen Abschnitte aneinander und an das Fahrzeug anklappen zu können. Diese Klappgelenke bilden destabilisierende Punkte bzw. müssen so ausgebildet sein, daß sie die Biege- und Pendelschwingungen der Ausleger aufnehmen können. Diese Umstände führen dazu, daß das Streuaggregat auch bei der Frühdüngung entweder in einer relativ hohen Lage betrieben werden muß, um aufgrund der Biege- und Pendelschwingungen ein Aufsetzen der Streuleitungen auf dem Boden zu vermeiden.

Der Erfindung liegt die Aufgabe zugrunde, bei einer Vorrichtung des vorgenannten Aufbaus die Stabilität des Streuaggregates ohne konstruktiven Mehraufwand bei gleichzeitiger Verringerung des Gewichtes und günstiger Schwerpunktlage zu verbessern und aufgrund der höheren Stabilität eine größtmögliche Streubreite zu ermöglichen.

Diese Aufgabe wird erfindungsgemäß dadurch gelöst, daß die Streuleitungen mit ihren Injektoren senkrecht übereinander und die beiden den Streuleitungen an jeder Fahrzeugseite zugeordneten Luftverteiler senkrecht angeordnet sind, wobei die längste Streuleitung oben und die kürzeste Streuleitung unten angeordnet ist.

Durch die Anordnung der Streuleitungen übereinander ergibt sich schon innerhalb des Systems der Streuleitungen ein wesentlich günstigeres Trägheitsmoment gegenüber Biege- und Pendelschwingungen. Das gleiche gilt für die die Streuleitungen aufzunehmenden Ausleger, an denen die Streuleitungen befestigt sind, da auch diese schmal und hoch bauen können ; insbesondere ist es nicht notwendig, einen filigranen Fachwerkträger vorzusehen. Dies führt ferner zu einer merklichen Gewichtsersparnis. Weiterhin ist es möglich, das gesamte Paket von Streuleitungen gegenüber der bisher bekannten Vorrichtung auf die Linie derjenigen Streuleitung zu legen, die dem Fahrzeug am nächsten liegt mit dem Ergebnis, daß die Baulänge verringert wird und damit der Schwerpunkt näher an das Fahrzeug verlagert werden kann, was wiederum günstig für die Bodenbelastung und die Gelandegängigkeit des Fahrzeugs ist. Die senkrechte Anordnung der Injektoren und der Luftverteiler ist bei der erfindungsgemäßen Vorrichtung deshalb möglich, weil der Dünger den Injektoren pneumatisch zugefördert wird, so daß es keine Rolle spielt, wie die Injektoren mit Bezug auf die Düngeraufgabe angeordnet sind. Da die Streuleitungen senkrecht übereinander angeordnet sind, können die Transportleitungen gegenüber der bekannten Vorrichtung nennenswert verkürzt werden, da sie nicht mehr in einer horizontale Ebene nach unten geführt werden müssen.

Es sind Vorrichtungen anderer Gattung bekannt (CH-A-445 177, DE-A-1 940 922), bei denen die Streuleitungen zumindest teilweise übereinander angeordnet sind. Hierbei handelt es sich aber um Schlauch- oder Kunststoffleitungen, denen der Dünger nicht einzeln in dosierter Form pneumatisch zugeführt wird, sondern entweder über eine einzige pneumatische Steigleitung und einen an deren Kopf angeordneten Verteiler (CH-A 445 177) oder über einen einfachen, von einem Gebläse beaufschlagten Verteilerkasten (DE-A-1 940 922). Diese Systeme ermöglichen keine große Streubreite, so daß sich hier auch nicht das Problem der Stabilisierung der Ausleger stellt. Im übrigen liegen die Aufgabestellen aller Streuleitungen im wesentlichen in einer horizontalen Ebene, was dann entsprechende Umlenkungen in die vertikal übereinanderliegenden Abschnitte der Streuleitungen erforderlich macht. Auch die bei einem anderen bekannten Gerät (DE-A-22 38 626) vorgesehene senkrechte Anordnung eines Luftverteilers erfüllt dort eine andere Aufgabe. Es handelt sich um eine Vorrichtung, bei der Streuaggregat und Vorratsbehälter zu einer Baueinheit vereint und vom Dreipunktgestänge eines Schleppers aufgenommen sind. Mit der senkrechten Anordnung des Luftverteilers in Verbindung mit der Anordnung des Gebläses neben dem Vorratsbehälter soll und kann hier nur erreicht werden, daß der Platzbedarf unterhalb des Vorratsbehälters gering ist und dieser folglich bei vorgegebener Bauhöhe großvolumiger ausgebildet sein kann.

Gemäß einer bevorzugten Ausführungsform sind die Streuleitungen von den Injektoren zu den Verteilerorganen abfallend geneigt. Bei der bekannten Anordnung der Streuleitungen in einer horizontalen Ebene befinden sich die am Ende der nach hinten weisenden Rohrkrümmer angeordneten Verteilerorgane, z. B. Prallplatten, alle in der horizontalen Ebene, weisen also den gleichen Abstand vom Boden auf. Dies wäre bei einer Anordnung der Streuleitungen senkrecht übereinander nur möglich, wenn vor den endständigen Rohrkrümmern weitere von oben nach unten führende Umlenkungen (CH-A-445 177) vorgesehen würden. Dadurch würden sich stark unterschiedliche Austrittsgeschwindigkeiten an den einzelnen Streuleitungen ergeben. Zudem wäre mit einem höheren Verschleiß zu rechnen. Dies wird durch die erfindungsgemäß vorgesehene, nach außen abfallende Neigung der Streuleitungen vermieden, so daß die Verteilerorgane auf einer annähernd horizontalen, gegebenenfalls etwas nach außen ansteigenden Linie angeordnet sind, ohne daß weitere Umlenkungen notwendig sind.

Gemäß einem weiteren Ausführungsbeispiel münden die Transportleitungen mit etwa horizontaler Achse an den Injektoren der Streuleitungen aus. Diese Ausbildung ist möglich, weil der Dünger pneumatisch in die Injektoren transportiert wird, also auch bei horizontaler Aufgabe eine einwandfreie Übergabe an den Förderstrom der Streuleitungen gewährleistet ist. Im übrigen wird durch diese Ausbildung die Länge der Transportleitungen auf ein Minimum reduziert.

Damit auch bei noch nennenswerter Geschwindigkeit des Düngers beim Übertritt aus den Transportleitungen eine einwandfreie Umlenkung um ca. 90° in die Streuleitung erfolgt, ist vorgesehen, daß am Übergang jeder Transportleitung in den Injektor der Streuleitung ein das Gut in Richtung der Luftströmung in der Streuleitung umlenkendes Leitorgan angeordnet ist.

Der Dünger wird bei der erfindungsgemäßen Ausbildung unmittelbar vor bzw. im Injektor in eine Richtung umgelenkt, die in etwa der Strömungsrichtung im Injektor und in der Streuleitung entspricht, so daß die Düngerpartikel keine oder eine nur unwesentliche Bewegungskomponente quer zu der Strömungsrichtung aufweisen. Durch die Umlenkung wird ferner die Bewegungsenergie der Partikel, die sie aus der Transportleitung mitbringen, nicht vollständig vernichtet, vielmehr treten sie schon in beschleunigter Form in die Förderluft des Injektors bzw. der Streuleitung ein, so daß es auch nicht zu Verstopfungen kommen kann. Strömungstechnisch das gleiche gilt für die in die Streuleitung einströmende Transportluft aus den Transportleitung n. Dadurch ist ferner gewährleistet, daß die in der Transportleitung vorhandene Gutbeladung der Transportluft bzw. die Dichte der Gutpartikel im Injektor bzw. in der Streuleitung erhalten bleibt, jedenfalls aber keine größere Partikeldichte entsteht, die zu Verstopfungen führen könnte. Schließlich sind durch diese Ausbildung auch Schwankungen in der Gutbeladung weitgehend ausgeschlossen.

In bevorzugter Ausführung der Erfindung ist das Leitorgan ein Rohrkrümmer, der mit seiner Krümmung gleichmäßig in den Injektor bzw. in die Streuleitung übergeht.

Der Rohrkrümmer kann zulaufseitig entweder dicht an die Transportleitung angeschlossen sein oder aber einen Ansaugtrichter aufweisen, in den die Transportleitung mit ihrem offenen Ende hineinragt.

Im erstgenannten Fall gelangen die Förderluft und die Gutpartikel mit der am Ende der Transportleitung vorhandenen Restenergie in den Injektor, während im zweitgenannten Fall über den Einlauftrichter Zuluft angesaugt wird, die zu einer zusätzlichen Beschleunigung und/oder Gutverdünnung in dem Rohrkrümmer sorgt. Die zweite Ausführung erleichtert ferner den Ausbau und Zugang zum Injektor.

In zweckmäßiger Ausführung ist vorgesehen, daß der Rohrkrümmer abströmseitig etwa parallel zur Streuleitung geführt ist und oberhalb sowie in Strömungsrichtung hinter der Engstelle des Injektors ausmündet, wobei die Ausbildung so getroffen sein kann, daß der untere Wandungsabschnitt des Rohrkrümmers und der darunter liegende Wandungsabschnitt der Streuleitung die Engstelle des Injektors bilden.

Die Düsenwirkung des Injektors entsteht also unmittelbar vor der Aufgabestelle des Produktes, während sich die Diffusorwirkung unmittelbar an der Aufgabestelle ausbildet.

Mit Vorteil ist der Injektor nach Art einer Flachdüse und der Rohrkrümmer zumindest abströmseitig entsprechend flach ausgebildet.

Gemäß einem bevorzugten Ausführungsbeispiel bilden der Injektor und das Leitorgan, z. B. der Rohrkrümmer, ein Bauteil, das an die Transportleitung die Streuleitung und das Gebläse bzw. einem diesen nachgeordneten Luftverteiler auswechselbar angeschlossen ist.

Dieses Ausführungsbeispiel ermöglicht es, den Injektor und das Leitorgan einzeln auszutauschen, was insbesondere deshalb von Wichtigkeit ist, weil es sich hierbei um die empfindlichste Stelle des gesamten Fördersystems handelt, und zwar sowohl was die Verstopfungsgefahr anlangt, als auch hinsichtlich des Verschleißes.

Schließlich ist von Vorteil, wenn der Injektor aus einem Kunststoff-Spritzgußteil und das Leitorgan zumindest an der das Gut leitenden Fläche aus korrosionsfestem Stahl gebildet ist, wobei letztere Maßnahme einerseits einem frühzeitigen Verschleiß vorbeugt, andererseits dem vor allem in feuchter Atmosphäre aggressiven Dünger standhält.

Nachstehend ist die Erfindung anhand eines in der Zeichnung wiedergegebenen Ausführungsbeispiels beschrieben.

In der Zeichnung zeigen :

Figur 1 eine schematische Seitenansicht eines Fahrzeugs mit aufgesatteltem Vorratsbehälter und einem Streuaggregat ;

Figur 2 eine Ansicht auf die Rückseite des Streuaggregates ;

Figur 3 eine Draufsicht auf die eine Hälfte der Darstellung gemäß Figur 3 ;

Figur 4 einen Schnitt A-A gemäß Figur 3,

Figur 5 eine Seitenansicht des Fahrzeugs mit dem Streuaggregat in Fahrstellung und

Figur 6 eine Draufsicht von oben auf einen Injektor der Streuleitungen.

Auf der Pritsche 1 des Systemschleppers ist ein großvolumiger Vorratsbehälter 2 aufgesattelt, der das Streugut aufnimmt. Der Systemschlepper weist ferner ein Dreipunktgestänge 3 aus zwei Unterlenkern 4 und einem Oberlenker 5 auf, an dem der Rahmen 6 eines Streuaggregates 7 angebracht ist.

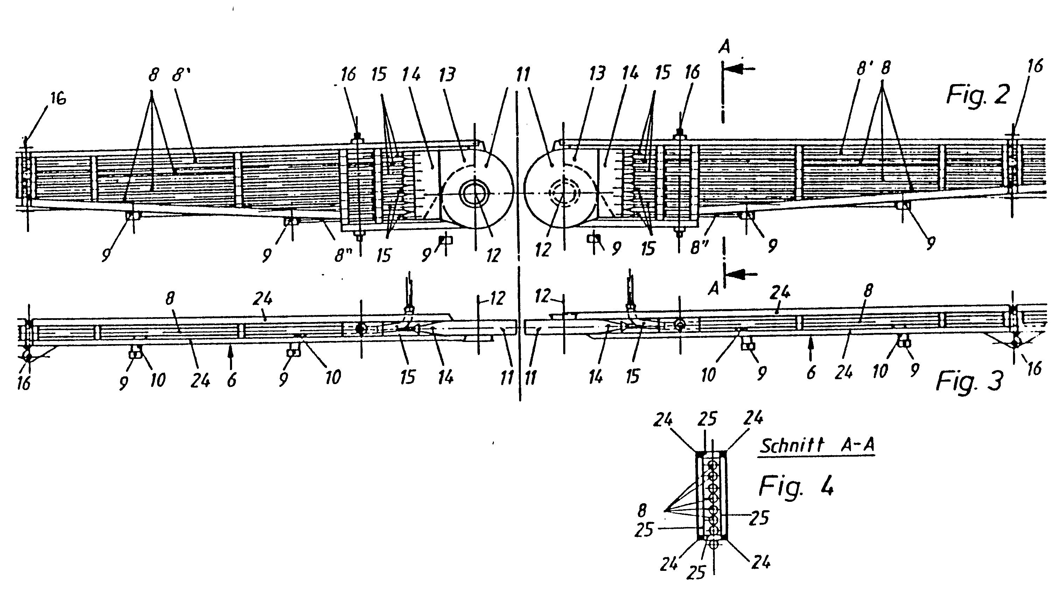

Das Streuaggregat 7 besteht aus mehreren parallel übereinander angeordneten Steuleitungen 8, die sich von der Fahrzeuglängsachse aus in Bündeln nach außen erstrecken und in unterschiedlichem Abstand an Verteilerorganen 9 (Figur 2) ausmünden. Diese Verteilerorgane bestehen beispielsweise aus Pralltellern, die vor nach hinten oder unten weisenden Rohrkrümmern 10 (Figur 3) der Streuleitungen angeordnet sein können. Wenigstens eine der Streuleitungen auf beiden Seiten der Fahrzeuglängsachse ist über eine Umlenkung nach innen zur Fahrzeuglängsachse hin geführt, um in der Flucht hinter dem Vorratsbehälter 2 bzw. dem Fahrzeug das Streugut zu verteilen.

Das Streuaggregat weist ferner für die Streuleitungen an jeder Fahrzeugseite je ein Gebläse 11 auf, dessen Achsen 12 horizontal und in Fahrtrichtung angeordnet sind. Jedes Gebläse 11 besitzt einen oben liegenden Druckstutzen 13, der zu Luftverteilern 14 führt, die sich über die gesamte Höhe der Streuleitungen 8 erstrecken und die die Gebläseluft auf die einzelnen Streuleitungen verteilen. Unmittelbar hinter dem Luftverteiler 14 setzen die Streuleitungen 8 mit je einem Injektor 15 an, die wiederum übereinander angeordnet sind. Die Streuleitungen 8 und der Rahmen 6, der sich auslegerartig nach außen erstreckt, sind, wie in Figur 3 schematisch angedeutet, in zwei oder mehr Abschnitte unterteilt, die über senkrechte Achsen 16 im wesentlichen horizontal in eine Fahrstellung geklappt werden können, wobei die Gebläse mitgeschwenkt werden. Die Streuleitungen 8, von denen die längste 8' oben und die kürzeste 8'' unten angeordnet ist, sind nach außen Abfallend geneigt, so daß die Prallplatten 9 auf einer horizontalen bzw. schwach nach außen ansteigenden Linie liegen.

Der auf dem Systemschlepper aufgesattelte Vorratsbehälter 2 weist beiderseits der Fahrzeuglängsachse jeweils nahe seiner Seitenbegrenzung angeordnete Auslauföffnungen auf, unterhalb deren Dosierorgane 18 in Form von achsparallel angeordneten Nockenrädern gelagert sind. Unterhalb der Dosierorgane 18 sind Dosierschalen 19 unter federnder Anlage an den Dosierorganen angeordnet, über die das dosierte Streugut in Auffangschalen 20 gelangt.

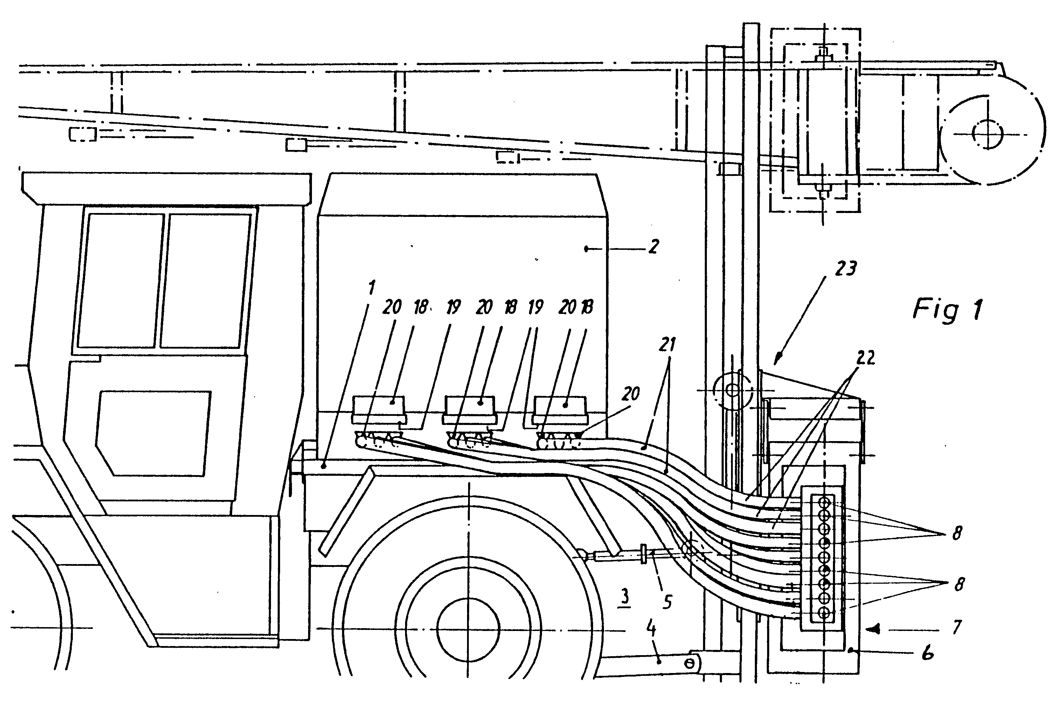

Jede Auffangschale 20 gehört einem Injektor einer Transportleitung 21 an, wobei die Anzahl der Transportleitungen der Anzahl der Streuleitungen 8 entspricht. Es sind also die Transportleitungen 21 jeder Behälterseite den Streuleitungen 8 des Streuaggregates 7 an der ensprechenden Fahrzeugseite zugeordnet. Beim gezeigten Ausführungsbeispiel sind jedem Dosierorgan drei Transportleitungen zugeordnet, die demgemäß zu jeweils drei Streuleitungen führen. Den Injektoren aller Transportleitungen ist wiederum ein Luftverteiler vorgeschaltet, der an ein weiteres (nicht gezeigtes) Gebläse, z. B. unterhalb des Vorratsbehälters 2 angeschlossen ist. Im übrigen sind die vorzugsweise als Schläuche ausgebildeten Transportleitungen 21 — beim gezeigten Ausführungsbeispiel jeweils zu dreien — zusammengefaßt und, wie Figur 1 zeigt, untereinander nach hinten zum Streuaggregat 7 geführt. Sie weisen dort einen den Niveauunterschied überbrückenden, nach unten gekrümmten Abschnitt 22 auf und münden mit horizontaler Achse in die Injektoren 15 der Streuleitungen 8 ein. Gegebenenfalls kann auf jeder Fahrzeugseite eine Transportleitung unmittelbar auf das jeweils innerste Verteilerorgan 9 (Fig. 3) geführt sein, hierfür also eine gesonderte Streuleitung entfallen.

Beim gezeigten Ausführungsbeispiel ist der Rahmen 6 des Streuaggregates über ein Hubgestell 23 an das Dreipunktgestänge 3 angeschlossen, so daß der Rahmen 6 höher als dies mit dem Dreipunktgestänge möglich ist, höhenverschiebbar ist. Stattdessen kann das Dreipunktgestänge entfallen und nur ein Hubgestell mit entsprechender Hubhöhe vorgesehen sein.

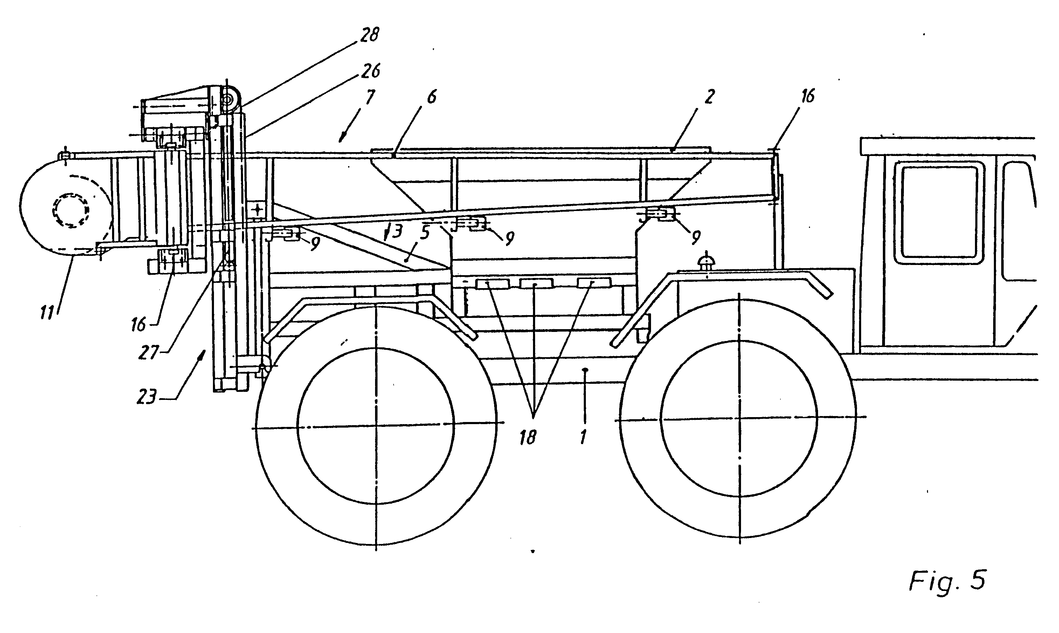

Der Rahmen 6 für die Streuleitungen 8 an jeder Fahrzeugseite besteht aus je zwei oberen und unteren, parallelen Holmen 24, die über Querstreben 25 ausgesteift sind (Figur 4). Der Ausleger baut also schmal und hoch und kann auf dem Hubgestell 23 nahe dem Fahrzeugheck (Figur 1 und 5) aufgenommen werden. Das Hubgestell 23 weist einen Hubmast 26 als Führung für das Streuaggregat 7 (Fig. 5) auf. Das Streuaggregat 7 kann mittels eines Hubzylinders 27 und eines Zugseils 28 aus der Betriebstellung in die in Figur 5 wiedergegebene Fahrstellung angehoben werden. Dann wird die aus dem Gebläse 11, dem Luftverteiler 13, den Injektoren und den Streuleitungen 8 mit den Auslegerarmen 6 bestehende Baueinheit um das fahrzeugnahe Gelenk 16 nach innen geklappt. Ferner können die einzelnen Abschnitte des Auslegers um die weiteren Klappgelenke 16 nach innen gefaltet werden, so daß der gesamte Ausleger seitlich an den Vorratsbehälter 2 angeschwenkt ist. Diese Ausbildung empfiehlt sich bei Fahrzeugen des gezeigten Typs mit vor der Vorderachse liegender Fahrerkabine, da dann der Vorratsbehälter zur Erzielung eines großen Fassungsvermögens schmal und lang ausgebildet sein kann, so daß auch bei seitlich angeklappten Auslegern die maximale Breite nicht überschritten wird.

Bei Fahrzeugen des in Fig. 1 gezeigten Typs, bei dem der Vorratsbehälter über der Hinterachse sitzt, seine Länge also begrenzt ist, muß der Behälter ausreichend breit und hoch sein und darf ferner der Ausleger im angeklappten Zustand nicht die Fahrertür versperren. Hier empfiehlt es sich, das Streuaggregat 7 über Oberkante Vorratsbehälter anzuheben und die Ausleger 6 über den Vorratsbehälter 2 einzuklappen.

Die Dosierorgane 18 und die Gebläse werden vorzugsweise hydraulisch angetrieben und von dem Hydrauliknetz des Systemschleppers versorgt, wodurch eine einfache Drehzahlregelung und damit eine sehr genaue Dosierung möglich ist, die vor allem unabhängig von dem sonstigen Fahrzeugantrieb ist.

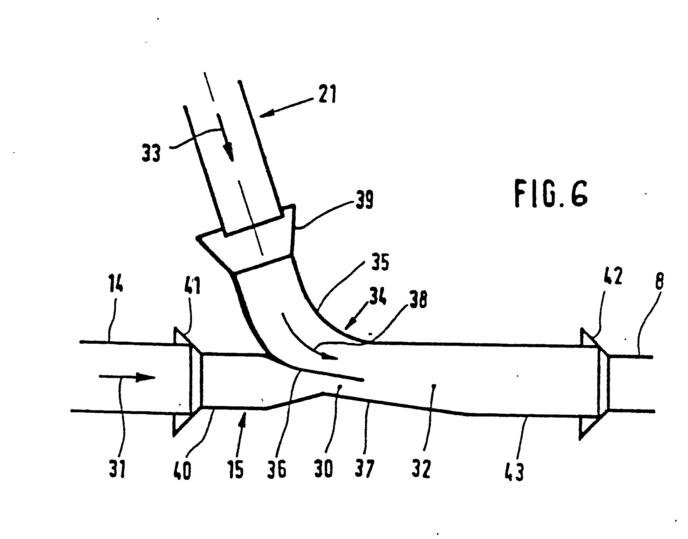

In Figur 6 ist der Übergangsbereich zwischen den Transportleitungen 21 und den Streuleitungen 8 im schematischen Schnitt vergrößert wiedergegeben. Die an der Übergangsstelle angeordneten Injektoren 15 sind einerseits an den Luftverteiler 14 des Gebläses 11 (Fig. 2), andererseits an die Streuleitungen 8 angeschlossen. Für die Beschleunigung der in Richtung des Pfeils 31 zuströmenden Förderluft weist jeder Injektor 15 eine Engstelle 30 auf, nach der er sich wieder diffusorartig im Bereich 32 erweitert. Im Bereich der Engstelle 30 mündet die vom Vorratsbehälter 2 kommende Transportleitung 21 ein. Die mit Gut beladene, in Richtung des Pfeils 33 strömende Transportluft wird zusammen mit den Gutpartikeln über ein Umlenkorgan 34 in den Injektor 15 hineingeführt. Das Umlenkorgan 34 ist beim gezeigten Ausführungsbeispiel als Rohrkrümmer 35 ausgebildet, wobei die Umlenkung der Gutpartikel in erster Linie durch den unteren Wandungsabschnitt 36 des Rohrkrümmers erfolgt. Bei dem wiedergegebenen Ausführungsbeispiel bildet dieser untere Wandungsabschnitt 36 mit dem gegenüberliegenden unteren Wandungsabschnitt 37 des Injektors 15 die Engstelle 30. Durch das Leitorgan 34 wird die Transportluft zusammen mit der Gutbeladung zur Strömungsrichtung der Förderluft 31 parallelgerichtet, wie dies mit dem Richtungspfeil 38 angedeutet ist.

Die Transportleitung 21 kann unmittelbar den Rohrkrümmer 35 aufweisen bzw. mit diesem verbunden sein. Beim gezeigten Ausführungsbeispiel jedoch ist der Rohrkrümmer 35 zulaufseitig mit einem Ansaugtrichter 39 versehen, in den der im wesentlichen horizontale Endabschnitt der Transportleitung 21 mit radialem Abstand hineinragt, so daß über den Ansaugtrichter 39 Zusatzluft in den Rohrkrümmer 35 eingesaugt wird.

Wie aus Figur 6 weiterhin erkennbar, ist der stromaufwärts gelegene Stutzen 40 des Injektors 15 über eine Dichtmanschette 41 an den Luftverteiler 14 angeschlossen. Die gleiche Ausbildung ist mittels einer Dichtmanschette 42 zwischen dem stromabwärts liegenden Stutzen 43 des Injektors 15 und der Streuleitung 8 vorgesehen, so daß sich der Injektor leicht auswechseln läßt.

Während der Injektor 15, wie auch der Luftverteiler 14, aus Kunststoff bestehen können, können der Rohrkrümmer 35, zumindest aber dessen unterer Wandungsabschnitt 36 aus korrosions- und verschleißfestem Stahl gebildet sein, um den mechanischen und chemisch-physikalischen Einwirkungen der Düngerpartikel an der Umlenkstelle standzuhalten.

Mit Vorteil ist entgegen der zeichnerischen Darstellung in Fig. 6 der Querschnitt des Injektors 15 am Ausgang, d. h. zum Übergang zur Streuleitung 8 größer, vorzugsweise etwa doppelt so groß als der Querschnitt des Zulaufs bzw. der Transportleitung 21, um der Vergrößerung der Luftmenge Rechnung zu tragen.

## Patentansprüche

1. Vorrichtung zum Streuen von Dünger oder dgl., mit einem von der Pritsche (1) eines Fahrzeugs, z. B. eines Systemschleppers, Selbstfahrers oder Anhängers, aufgenommenen Vorratsbehälter (2) mit Auslauföffnungen und darunter angeordneten Dosierorganen (18), die den Dünger an darunter befindliche, einerseits über einen Luftverteiler an ein erstes Gebläse angeschlossene, andererseits den Einlauf je einer Transportleitung (21) bildende Injektoren abgeben, und mit einem am Fahrzeugheck heb- und senkbaren pneumatischen Streuaggregat (7), das mehrere sich beiderseits der Fahrzeuglängsachse und quer zu dieser erstreckende, außen mit unterschiedlichem Abstand von dieser an Verteilerorganen (9) ausmündende und in eine Fahrstellung anklappbare Streuleitungen (8) aufweist, die innen über je einen Injektor (15) und einen Luftverteiler (14) an wenigstens ein weiteres Gebläse (11) angeschlossen sind, wobei je eine Transportleitung (21) an dem Injektor (15) einer Streuleitung (8) ausmündet, dadurch gekennzeichnet, daß die Streuleitungen (8) mit ihren Injektoren (15) senkrecht übereinander und die beiden, den Streuleitungen (8) an jeder Fahrzeugseite zugeordneten Luftverteiler (14) senkrecht angeordnet sind, wobei die längste Streuleitung (8') oben und die kürzeste Streuleitung (8'') unten angeordnet ist.

2. Vorrichtung nach Anspruch 1, dadurch gekennzeichnet, daß die Streuleitungen (8) von den Injektoren (15) zu den Verteilerorganen (9) abfallend geneigt sind.

3. Vorrichtung nach Anspruch 1 oder 2, dadurch gekennzeichnet, daß die Transportleitungen (21) mit etwa horizontaler Achse an den Injektoren (15) der Streuleitungen (8) ausmünden.

4. Vorrichtung nach einem der Ansprüche 1 bis 3, dadurch gekennzeichnet, daß am Übergang (16) jeder Transportleitung (21) in den Injektor (15) der Streuleitung (8) ein das Gut in Richtung der Luftströmung in der Streuleitung umlenkendes Leitorgan (34) angeordnet ist.

5. Vorrichtung nach Anspruch 4, dadurch gekennzeichnet, daß das Leitorgan (34) ein Rohrkrümmer (35) ist, der mit seiner Krümmung gleichmäßig in den Injektor (15) bzw. die Streuleitung (8) übergeht.

6. Vorrichtung nach Anspruch 4 oder 5, dadurch gekennzeichnet, daß der Rohrkrümmer (35) zulaufseitig einen Ansaugtrichter (39) aufweist, in den die Transportleitung (21) mit ihrem offenen Ende hineinragt.

7. Vorrichtung nach einem der Ansprüche 4 bis 6, dadurch gekennzeichnet, daß der Rohrkrümmer (35) abströmseitig parallel zur Streuleitung (8) geführt ist und oberhalb sowie in Strömungsrichtung hinter der Engstelle (30) des Injektors (15) ausmündet.

8. Vorrichtung nach Anspruch 7, dadurch gekennzeichnet, daß der untere Wandungsabschnitt (36) des Rohrkrümmers (35) und der darunter liegende Wandungsabschnitt (37) des Injektors (15) die Engstelle (30) des Injektors bilden.

9. Vorrichtung nach einem der Ansprüche 4 bis 8, dadurch gekennzeichnet, daß der Injektor (15) nach Art einer Flachdüse und der Rohrkrümmer (35) zumindest abströmseitig entsprechend flach ausgebildet ist.

10. Vorrichtung nach einem der Ansprüche 4 bis 9, dadurch gekennzeichnet, daß der Injektor (15) und das Leitorgan (34), z. B. der Rohrkrümmer (35), ein Bauteil bilden, das an die Transportleitung (21), die Streuleitung (8) und das Gebläse bzw. einen diesem nachgeordneten Luftverteiler (14) auswechselbar angeschlossen ist.

11. Vorrichtung nach einem der Ansprüche 4 bis 10, dadurch gekennzeichnet, daß der Injektor (15) aus einem Kunststoff-Spritzgußteil und das Leitorgan (34) zumindest an der das Gut leitenden Fläche (36) aus korrosionsfestem Stahl gebildet ist.

12. Vorrichtung nach einem der Ansprüche 1 bis 11, dadurch gekennzeichnet, daß der Querschnitt am Ausgang des Injektors (15) etwa doppelt so groß ist wie der Querschnitt der Transportleitung (21).

13. Vorrichtung nach einem der Ansprüche 1 bis 12, dadurch gekennzeichnet, daß für die Streuleitungen (8) jeder Fahrzeugseite ein Gebläse (11) vorgesehen ist.

14. Vorrichtung nach einem der Ansprüche 1 bis 13, dadurch gekennzeichnet, daß die beiden Gebläse (11) mit zur Fahrzeuglängsachse paralleler, horizontaler Achse (12) angeordnet und die Luftverteiler (14) unmittelbar an den Druckstutzen (13) der Gebläse (11) angeschlossen sind.

15. Vorrichtung nach einem der Ansprüche 1 bis 14, dadurch gekennzeichnet, daß die Gebläse (11) mit oben liegendem Druckstutzen (13) angeordnet sind.

16. Vorrichtung nach einem der Ansprüche 1 bis 15, bei der die Streuleitungen aus jeweils etwa gleichlangen, lose gekuppelten Abschnitten bestehen und an Auslegern befestigt sind, die zum Anklappen der Streuleitungen in die Fahrstellung über Gelenke schwenkbar miteinander verbunden sind, dadurch gekennzeichnet, daß alle Gelenke (16) senkrecht angeordnet sind.

17. Vorrichtung nach einem der Ansprüche 1 bis 16 dadurch gekennzeichnet, daß die Hubhöhe des Streuaggregates (7) so bemessen ist, daß die Streuleitungen (8) an oder über den Vorratsbehälter (2) in einer ausschließlich etwa horizontalen Ebene klappbar sind.

18. Vorrichtung nach einem der Ansprüche 1 bis 17 dadurch gekennzeichnet, daß für die Streuleitungen (8) jeder Fahrzeugseite ein Gebläse (11) vorgesehen ist und daß jedes Gebläse (11) zusammen mit den ihnen zugeordneten Streuleitungen (8) um ein fahrzeugnahes Klappgelenk (16) schwenkbar ist.

19. Vorrichtung nach Anspruch 16 oder 18, dadurch gekennzeichnet, daß die beiden Gebläse (11) für die Streuleitungen (8) mit zur Fahrzeuglängsachse paralleler horizontaler Achse (12) angeordnet, die Luftverteiler (14) jeweils unmittelbar an die Druckstutzen (13) der Gebläse (11) angeschlossen sind und mit diesen und den Injektoren (15) als eine Baueinheit ausgebildet sind.

20. Vorrichtung nach einem der Ansprüche 1 bis 19, dadurch gekennzeichnet, daß die Streuleitungen (8) an jeder Fahrzeugseite und die aus Gebläse (11), Luftverteiler (14) und Injektoren (15) bestehende Baueinheit an dem rahmenartigen Ausleger (6) angeordnet sind, der an dem fahrzeugnahen Klappgelenk (16) gelagert ist und seinerseits die weiteren Klappgelenke (16) aufweist.

21. Vorrichtung nach einem der Ansprüche 1 bis 20, dadurch gekennzeichnet, daß der rahmenartige Ausleger (6) aus je zwei parallelen oberen und unteren Holmen (24) besteht, zwischen denen die Streuleitungen (8) angeordnet sind.

22. Vorrichtung nach einem der Ansprüche 1 bis 21, wobei das Streuaggregat von einem Hubgestell aufgenommen wird, das seinerseits an einem Dreipunktgerstänge des Fahrzeugs angebracht ist, dadurch gekennzeichnet, daß die Hubhöhe des Hubgestells (23) über der Hubhöhe des Dreipunktgestänges (3) so bemessen ist, daß die Streuleitungen (8) in der angehobenen Lage an oder über den Vorratsbehälter (2) schwenkbar sind.

23. Vorrichtung nach einem der Ansprüche 1 bis 22 mit einer Streubreite größer 12 m, dadurch gekennzeichnet, daß der Ausleger und die Streuleitungen aus nur zwei Abschnitten bestehen, von denen der äußere entgegen, der innere in Fahrtrichtung schwenkbar ist.

24. Vorrichtung nach einem der Ansprüche 1 bis 23, dadurch gekennzeichnet, daß jeder Ausleger mit den Streuleitungen im zusammengeklappten Zustand aus der Fahrstellung um das fahrzeugnahe Gelenk nach außen schwenkbar ist.

## Claims

1. Spreader for fertilizer and the like, with a storage container (2) received by the platform (1) of a vehicle, e. g. a system tractor, automotive vehicle or trailer and having outlet openings and dosing members (18) positioned beneath the same, which supply the fertilizer to injectors positioned beneath the same and connected on the one hand by means of an air distributor to a first blower and on the other hand forming the inlet of in each case one transport line, and with a raisable and lowerable pneumatic spreading unit (7) located on the back of the vehicle and having several spreading lines (8) on either side of the vehicle longitudinal axis and at right angles thereto, issuing externally with different spacing therefrom on distributor members (9) and which can be tilted up into a travel position, said lines being internally connected by means of in each case one injector (15) and an air distributor (19) to at least one further blower (11), a spreading line (8) issuing into each transport line (21) on injector (15), characterized in that the spreading lines with their injectors (15) are vertically superimposed and the two air distributors (14) associated with the spreading lines (8) on each vehicle side are vertically positioned, the longest spreading line (8') being located at the top and the shortest spreading line (8″) at the bottom.

2. Spreader according to claim 1, characterized in that the spreading lines (8) slope downwards from the injectors (15) to the distributor members (9).

3. Spreader according to claims 1 or 2, characterized in that the transport lines (21) issue with an approximately horizontal axis at the injectors (15) of the spreader lines (8).

4. Spreader according to one of the claims 1 to 3, characterized in that at the transition (16) of each transport line (21) into the injector (15) of the spreader line (8) is provided a guide member (34) deflecting the product in the direction of the air flow in the spreader line.

5. Spreader according to claim 4, characterized in that the guide member (34) is a pipe bend (35), which with its curvature passes uniformly into the injector (15) or spreader line (8).

6. Spreader according to claims 4 or 5, characterized in that on the feed side the pipe bend (35) has a suction funnel (39), into which projects the open end of transport line (21).

7. Spreader according to one of the claims 4 to 6, characterized in that on the downstream side, the pipe bend (35) is guided parallel to the spreader line (8) and both above and in the flow direction issues behind the constriction (30) of injector (15).

8. Spreader according to claim 7, characterized in that the lower wall portion (36) of pipe bend (35) and the wall portion (37) of injector (15) positioned below it form the constriction (30) of the injector.

9. Spreader according to one of the claims 4 to 8, characterized in that the injector (15) is constructed in the manner of a flat nozzle and at least on the downstream side the pipe bend (35) is correspondingly flat.

10. Spreader according to one of the claims 4 to 9, characterized in that the injector (15) and guide member (34), e. g. pipe bend (35), form a standard component, which can be interchangeably connected to the transport line (21), spreader line (18) and blower or an air distributor (14) following the latter.

11. Spreader according to one of the claims 4 to 10, characterized in that the injector (15) is formed from a plastic injection moulding and the guide member (34), at least on the surface (36) guiding the product is made from stainless steel.

12. Spreader according to one of the claims 1 to 11, characterized in that the cross-section at the outlet of injector (15) is approximately twice as large as the cross-section of the transport line (21).

13. Spreader according to one of the claims 1 to 12, characterized in that for the spreader lines (8) of each vehicle side a blower (11) is provided.

14. Spreader according to one of the claims 1 to 13, characterized in that the two blowers (11) are arranged with a horizontal axis (12) parallel to the vehicle longitudinal axis and the air distributors (14) are directly connected to the pressure connection (13) of blower (11).

15. Spreader according to one of the claims 1 to 14, characterized in that the blowers (11) are positioned with the pressure connection (13) at the top.

16. Spreader according to one of the claims 1 to 15, in which the spreader lines in each case comprise equally long, loosely coupled portions and are fixed to arms, which are pivotably interconnected by means of joints to tilt the spreader lines into the travel position, characterized in that all the joints (16) are positioned vertically.

17. Spreader according to one of the claims 1 to 16, characterized in that the height of lift of the spreader unit (7) is such that the spreader lines (8) can be tilted on or over the storage tank (2) in an exclusively, roughly horizontal plane.

18. Spreader according to one of the claims 1 to 17, characterized in that for the spreader lines (8) of each vehicle side is provided a blower (11) and that each blower (11), together with its associated spreader lines (8), is pivotable about a vehicle-near hinged joint (16).

19. Spreader according to claim 16 or 18, characterized in that the two blowers (11) for the spreader lines (8) are arranged with a horizontal axis (12) parallel to the vehicle longitudinal axis, the air distributors (14) are in each case directly connected to the pressure connections (13) of the blowers (11) and are constructed with the latter and the injectors (15) as a standard component.

20. Spreader according to one of the claims 1 to 19, characterized in that the spreader lines (8) on each vesicle side and the standard component comprising blowers (11), air distributors (14) and injectors (15) are arranged on the frame-like arm (6), which is mounted on the vehicle-near hinged joint (16) and in turn has further hinged joints (16).

21. Spreader according to one of the claims 1 to 20, characterized in that the frame-like arm (6) comprises in each case two parallel upper and lower members (24), between which are arranged the spreader lines (8).

22. Spreader according to one of the claims 1 to 21, in which the spreader unit is received by a lifting frame, which is in turn fitted to the three-point linkage of the vehicle, characterized in that the height of lift of the lifting frame (23) over the height of lift of the three-point linkage (3) is so dimensioned that the spreader lines (8) in the raised position are pivotable on or over the storage container (2).

23. Spreader according to one of the claims 1 to 12, with a spreading width greater than 12 m, characterized in that the arm and spreader lines comprise only two portions, whereof the outer portion is pivotable against and the inner portion in the travel direction.

24. Spreader according to one of the claims 1 to 23, characterized in that each arm with the spreader lines can be pivoted outwards out of the travel position about the vehicle-near joint in the collapsed state.

## Revendications

1. Dispositif pour épandre de l'engrais ou l'analogue, comportant un réservoir (2) porté par la plateforme (1) d'un véhicule, par exemple un tracteur porte-outils, un châssis automoteur ou une remorque, le réservoir étant muni d'ouvertures de décharge et d'organes doseurs (18) disposés dessous, reliés d'une part par l'intermédiaire d'un diffuseur d'air à un premier ventilateur et constituant, d'autre part, respectivement l'entrée d'une canalisation de transport (21), le dispositif comportant aussi un groupe d'épandage (7) pneumatique, pouvant être relevé et abaissé à l'arrière du véhicule et comportant plusieurs canalisations d'épandage (8) s'étendant de chaque côté de l'axe longitudinal du véhicule et transversalement à celui-ci, débouchant à différentes distances de cet axe sur des organes de distribution (9) et pouvant être rabattues en position de route, lesquelles canalisations sont raccordées à l'intérieur respectivement par un injecteur (15) et un diffuseur d'air (14) à au moins un autre ventilateur (11), une canalisation de transport (21) débouchant respectivement sur l'injecteur (15) d'une canalisation d'épandage (8), caractérisé en ce que les canalisations d'épandage (8) avec leurs injecteurs (15) sont disposées verticalement l'une au-dessus de l'autre et les deux diffuseurs d'air (14) associés aux canalisations d'épandage (8) sur chaque côté du véhicule, sont disposés verticalement l'un au-dessus de l'autre, la canalisation d'épandage (8') la plus longue étant placée en haut et la plus courte (8") en bas.

2. Dispositif selon la revendication 1, caractérisé en ce que les canalisations d'épandage (8) sont inclinées en descendant des injecteurs (15) jusqu'aux organes de distribution (9).

3. Dispositif selon la revendication 1 ou 2, caractérisé en ce que les canalisations de transport (21) débouchent avec un axe sensiblement horizontal sur les injecteurs (15) des canalisations d'épandage (8).

4. Dispositif selon l'une des revendications 1 à 3, caractérisé en ce qu'à la transition (16) entre chaque canalisation de transport (21) et l'injecteur (15) de la canalisation d'épandage (8), est disposé un organe de guidage (34) déviant le produit dans le sens du courant d'air dans la canalisation d'épandage.

5. Dispositif selon la revendication 4, caractérisé en ce que l'organe de guidage (34) est un coude de tuyau (35) qui se raccorde par sa courbure régulièrement à l'injecteur (15) ou à la canalisation d'épandage (8).

6. Dispositif selon la revendication 4 ou 5, caractérisé en ce que le coude de tuyau (35) comporte du côté alimentation un entonnoir d'aspiration (39) dans lequel saille l'extrémité ouverte de la canalisation de transport (21).

7. Dispositif selon l'une des revendications 4 à 6, caractérisé en ce que le coude de tuyau (35) est guidé, du côté aval, parallèlement à la canalisation d'épandage (8) et débouche au-dessus et à l'arrière de la partie étroite (30) de l'injecteur (15) dans le sens de l'écoulement.

8. Dispositif selon la revendication 7, caractérisé en ce que la portion inférieure (36) de la paroi du coude de tuyau (35) et la portion de paroi (37) de l'injecteur située en dessous constituent la partie étroite (30) de l'injecteur.

9. Dispositif selon l'une des revendications 4 à 8, caractérisé en ce que l'injecteur (15) est réalisé à la façon d'une buse plate et le coude de tuyau (35) a une forme plate correspondante, au moins du côté aval.

10. Dispositif selon l'une des revendications 4 à 9, caractérisé en ce que l'injecteur (15) et l'organe de déviation (34), par exemple le coude de tuyau (35), constituent un élément de construction qui est raccordé, de façon interchangeable, à la canalisation de transport (21), à la canalisation d'épandage (8) et au ventilateur ou à un diffuseur d'air (14) monté à la suite de celui-ci.

11. Dispositif selon l'une des revendications 4 à 10, caractérisé en ce que l'injecteur (15) est constitué par un élément en matière plastique moulé par injection et l'organe de guidage (34) est constitué, au moins sur sa surface (36) conduisant le produit, par de l'acier résistant à la corrosion. .

12. Dispositif selon l'une des revendications 1 à 11, caractérisé en ce que la section transversale à la sortie de l'injecteur (15) est sensiblement le double de la section transversale de la canalisation de transport (21).

13. Dispositif selon l'une des revendications 1 à 12, caractérisé en ce qu'on prévoit un ventilateur (11) pour les canalisations d'épandage (8) de chaque côté du véhicule.

14. Dispositif selon l'une des revendications 1 à 13, caractérisé en ce que les deux ventilateurs (11) sont disposés avec leur axe (12) horizontal, parallèle à l'axe longitudinal du véhicule, et les diffuseurs d'air (14) sont raccordés directement à l'embout de refoulement (13) des ventilateurs (11).

15. Dispositif selon l'une des revendications 1 à 14, caractérisé en ce que les ventilateurs (11) sont disposés avec leur embout de refoulement situé en haut.

16. Dispositif selon l'une des revendications 1 à 15, dans lequel les canalisations d'épandage sont constituées par des sections sensiblement de même longueur, couplées sans être fixées, et qu'elles sont fixées sur des bras en porte-à-faux qui sont reliés ensemble à pivotement autour d'articulations pour qu'on puisse rabattre ces canalisations d'épandage en position de route, caractérisé en ce que toutes les articulations (16) sont disposées verticalement.

17. Dispositif selon l'une des revendications 1 à 16, caractérisé en ce que la hauteur de levage du groupe d'épandage (17) est telle que les canalisations d'épandage (8) peuvent être rabattues dans un plan exclusivement horizontal, contre ou au-dessus du réservoir (2).

18. Dispositif selon l'une des revendications 1 à 17, caractérisé en ce qu'on prévoit pour les canalisations d'épandage (8) de chaque côté du véhicule un ventilateur (11) et en ce que chaque ventilateur (11) peut pivoter autour d'une articulation de pivotement (16) proche du véhicule, en même temps que les canalisations d'épandage qui lui sont associées.

19. Dispositif selon la revendication 16 ou 18, caractérisé en ce que les deux ventilateurs (11) pour les canalisations d'épandage (8) sont disposés avec leur axe longitudinal (12) parallèle à l'axe longitudinal du véhicule, et en ce que les diffuseurs d'air (14) sont reliés chacun directement aux embouts de refoulement (13) des ventilateurs (11) et sont réalisés avec ceux-ci et les injecteurs (15) pour former une unité de construction.

20. Dispositif selon l'une des revendications 1 à 19, caractérisé en ce que les canalisations d'épandage (8) sur chaque côté du véhicule et l'unité de construction constituée par les ventilateurs (11), les diffuseurs d'air (14) et les injecteurs (15) sont disposés sur le bras en porte-à-faux en forme de cadre, lequel est monté sur l'articulation de pivotement (16) proche du véhicule et comporte, de son côté, les autres articulations de pivotement (16).

21. Dispositif selon l'une des revendications 1 à 20, caractérisé en ce que le bras en forme de cadre (6) est constitué par deux longerons (24) parallèles, supérieur et inférieur, entre lesquels sont disposées les canalisations d'épandage (8).

22. Dispositif selon l'une des revendications 1 à 21, dans lequel le groupe d'épandage est tenu par un bâti de relevage qui est fixé, de son côté, sur un attelage trois points du véhicule, caractérisé en ce que la hauteur de levage du bâti de relevage (23) au-dessus de la hauteur de levage de l'attelage trois points (3) est telle que les canalisations d'épandage (8), dans la position relevée, peuvent pivoter contre le réservoir (2) ou au-dessus de celui-ci.

23. Dispositif selon l'une des revendications 1 à 22, comportant une largeur d'épandage supérieure à 12 m, caractérisé en ce que le bras en porte-à-faux et les canalisations d'épandage ne sont constitués que de deux sections, dont la section extérieure peut pivoter en sens inverse du sens de la marche et la section intérieure dans le sens de la marche.

24. Dispositif selon l'une des revendications 1 à 23, caractérisé en ce que chaque bras en porte-à-faux peut pivoter autour de l'articulation proche du véhicule, de la position de route vers l'extérieur, avec les canalisations d'épandage rabattues.

Fig 1

EP 0 202 462 B1

Fig. 2

Fig. 3

Schnitt A-A

Fig. 4

2

Fig. 5

EP 0 202 462 B1

FIG.6